(19) **Europäisches Patentamt European Patent Office Office européen des brevets**

(11) **EP 3 907 305 B1**

(12) **EUROPEAN PATENT SPECIFICATION**

(45) Date of publication and mention
of the grant of the patent:
**20.11.2024 Bulletin 2024/47**

(21) Application number: **21739905.4**

(22) Date of filing: **01.02.2021**

(51) International Patent Classification (IPC):
**C22B 11/00** (2006.01) **C22B 7/00** (2006.01)
**C22B 11/02** (2006.01)

(52) Cooperative Patent Classification (CPC):
**C22B 11/026;** Y02P 10/20

(86) International application number:
**PCT/CN2021/074715**

(87) International publication number:
**WO 2021/179847 (16.09.2021 Gazette 2021/37)**

(54) **METHOD FOR DESIGNING SLAG TYPE FOR CAPTURING PLATINUM GROUP METAL IN WASTE CATALYST BY USING IRON**

DESIGNVERFAHREN EINES SCHLACKETYPS ZUM SAMMELN VON METALL DER PLATINGRUPPE AUS EINEM ABFALLKATALYSATOR UNTER VERWENDUNG VON EISEN

PROCÉDÉ D'ÉLABORATION DE TYPE DE LAITIER POUR CAPTURER UN MÉTAL DU GROUPE DU PLATINE DANS UN CATALYSEUR USÉ EN UTILISANT DU FER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.07.2020 CN 202010631384**

(43) Date of publication of application:
**10.11.2021 Bulletin 2021/45**

(73) Proprietor: **University Of Science And Technology Beijing**
**Beijing 100083 (CN)**

(72) Inventors:
• **ZHANG, Shengen**
**Beijing 100083 (CN)**
• **DING, Yunji**
**Beijing 100083 (CN)**

(74) Representative: **JD&P Patent Attorneys**
**Joanna Dargiewicz & Partners**
**ul. Mysliborska 93A/50**
**03-185 Warszawa (PL)**

(56) References cited:
CN-A- 102 796 877    CN-A- 103 184 345
CN-A- 106 756 084    CN-A- 106 756 084
CN-A- 108 875 285    CN-A- 110 735 042
CN-A- 111 893 314    US-A1- 2019 256 949

• DING YUNJI ET AL: "Highly efficient recovery of platinum, palladium, and rhodium from spent automotive catalysts via iron melting collection", RESOURCES, CONSERVATION AND RECYCLING, ELSEVIER, AMSTERDAM, NL, vol. 155, 25 December 2019 (2019-12-25), XP086013221, ISSN: 0921-3449, [retrieved on 20191225], DOI: 10.1016/J.RESCONREC.2019.104644
• DING YUNJI: "Research on the Mechanism and Application of Platinum Group Metals Enrichment from Spent Catalysts", DOCTORAL DISSERTATIONS, 31 December 2019 (2019-12-31), XP055843326
• DING YUNJI: "Research on the Mechanism and Application of Platinum Group Metals Enrichment from Spent Catalysts", DOCTORAL DISSERTATIONS, 31 December 2019 (2019-12-31), XP055843326

**Description**

TECHNICAL FIELD

The present application relates to that technical field of platinum group metals recycling, in particular to a slag design method for iron trapping of platinum group metals from spent catalysts.

BACKGROUND

China's platinum group metals mineral resources are extremely scarce. The output of raw ore is only 2-3 tons, but the consumption is as high as 150 tons, therefore, China is the largest platinum group metals consumer in the world, and the contradiction between supply and demand is extremely prominent. Spent catalysts are the most important sources of secondary resources of platinum group metals, and their recovery will effectively alleviate the supply risk of platinum group metals in China, which has become the focus of research.

Chinese invention patent (CN201810185054.8) discloses a method for recovering precious metal platinum from automobile spent catalysts by using iron oxide as a collector, with FeO, CaO, $Al_2O_3$, MgO and $SiO_2$ forming a five-element slag system, and the smelting temperature is as high as 1600-2000°C. In this method, the platinum content in the slag is 5-15 g/t, and the recovery rate is high (> 99%). However, due to the unreasonable design of slag type, the slag phase has high melting point, high viscosity and high melting temperature, ferrosilicon alloy is produced, which causes high energy consumption and high requirements for refractory materials, and increases the production cost. Chinese invention patent (CN201610883402.X) discloses that the platinum group metals in the waste automobile exhaust catalyst are recovered by adding calcium oxide for slagging, and the platinum group metals are smelted in a plasma furnace at 1500-1800°C, which has the advantages of less slag amount and a high recovery rate of platinum and palladium (> 99%), but a low recovery rate of rhodium (about 90%). However, because the slag type is not optimized, the melting temperature is high, which makes it difficult to dissolve to form ferrosilicon alloy, and the plasma furnace equipment is expensive and the operation cost is high. Chinese invention patent (CN201310005494.8) discloses that iron and copper are used as collectors to recover the spent catalysts of an alumina carrier, and the slag former is only sodium salt, so that the recovery rate of platinum group metals is higher than 98%. However, it is difficult to achieve the above effect only by adding sodium salt to the slag. The melting point of the slag phase is high, and the sodium salt volatilizes seriously at high temperature. Chinese invention patent (CN201611141140.6) discloses a method for extracting precious metals by taking iron-based materials as a collector, wherein the slag former is any one of calcium oxide, silicon dioxide, calcium fluoride, aluminum oxide, magnesium oxide, sodium carbonate and borax or a combination thereof, which realizes high-efficiency iron trapping of platinum group metals, but the specific slag type and slag phase composition interval are not given in this method. Chinese patent application (CN108875285A) discloses a molten steel refining slag composition design method and belongs to the technical field of clean steel smelting. The method includes: building and solving a steel slag interface inclusion motion model, quantitatively evaluating the influence of inclusion size, inclusion density, slag phase density, slag phase viscosity, molten steel density, molten steel viscosity and the wettability of inclusion at the steel slag interface on the motion removing process of the inclusion at the steel slag interface, determining the slag phase viscosity range and slag phase composition range when the inclusion can be removed, and determining the optimal refining slag composition range according to the target composition control requirement of the inclusion in steel. Chinese patent application (CN106756084A) discloses a method for extracting heavy metals through adopting an iron-based material as a capturing agent, and belongs to the technical field of heavy metal extraction. The method is characterized in that the iron-based material is adopted as the capturing agent, the capturing agent, a heavy metal material, a reducing agent and a slag former are matched and mixed, a mixture is smelted, an iron-base alloy rich in heavy metals is obtained through slag-iron separation, and then, the heavy metals are further enriched through electrolysis or acidolysis. Ding Yunji et al. discloses the use of slag simulation performed by thermodynamic software ("Highly efficient recovery of platinum, palladium, and rhodium from spent automotive catalysts via iron melting collection", Resources, Conservation and Recycling, Elsevier, Amsterdam NL, vol. 155).

Iron powder is used as collector to recover platinum group metals. The smelting and trapping process mainly includes melting of iron, platinum group metals and slag phase, settling of iron trapping platinum group metals and Fe-PGMs, in which Fe-PGMs settling process continuously collects and traps platinum group metals. Therefore, the collection rate of platinum group metals depends on the content of Fe-PGMs in the slag. In order to improve the platinum group metals trapping rate, it is necessary to reduce the platinum group metals content in slag phase and improve the design efficiency of slag.

SUMMARY

In view of the above technical problems, the present application provides a slag design method for iron trapping of platinum group metals from spent catalysts, which aims to efficiently allocate a slag type according to the design method, reduce experimental workload, shorten the research and development cycle, and has the characteristics of rapidity, accuracy and high efficiency; at the same time, the present application also provides a slag type blending technology for spent catalysts containing platinum group metals with cordierite, alumina, zeolite and silica as carriers, and designs a slag type with a low melting point, a low viscosity and a low density of the slag phase, thereby improving the separation efficiency of slag from iron, reducing the content of platinum group metals in the slag and realizing efficient and low-cost recovery of platinum group metals.

The invention is defined by claim 1. Preferred embodiments are defined by the dependent claims.

The present application adopts the following technical solution:

A slag design method for platinum group metals in iron trapping of spent catalysts includes:

> S1, determining ranges of a viscosity and a density of a slag phase according to a critical dimension and a settling speed when iron droplets settle completely by analyzing a movement track of the iron droplets in a smelting slag;
> S2, selecting, according to a type of spent catalysts carrier, a type of slag former, determining a composition of slag phase elements, selecting an appropriate melting temperature interval, and adopting thermodynamic software to calculate and determine a target slag phase composition by simulation;
> S3, according to the target slag phase composition determined by simulation, based on the spent catalysts carrier, adding the slag former to adjust the slag phase composition, verifying and optimizing the slag type of the spent catalyst, and realizing efficient collection of platinum group metals.

In the present invention step S1 specifically includes:

> (1) determining that the critical dimension d of the iron droplets is not more than 20μm; wherein, he critical dimension d of the iron droplets is the maximum size of the unsettled iron droplets in the slag; the determination process of the critical dimension of the iron droplets is as follows: according to the existing experimental data, the empirical relationship between the platinum group metals recovery rate and the diameter d of the iron droplets is clarified; when the critical dimension of the iron droplets is not more than 20 μm, the recovery rate of the platinum group metals is not less than 99%;
> (2) determining a critical settling velocity v of the iron droplets based on smelting efficiency:

>> since the settlement process of the iron droplets is dominated by uniform motion, the motion displacement is approximately proportional to the settlement time,

$$L = \mathrm{v}t$$

>> where, L is the kinematic displacement (m) of the iron droplets, which can be obtained by measurement, and t is the settlement time (s) of the molten iron;
>> controlling the smelting time based on the smelting efficiency, namely controlling the settling time t after the iron is melted; determining that the critical settlement speed v of the iron droplets is not less than $1.0 \times 10^{-5}$ m/s, wherein the smelting efficiency is the mass of the spent catalysts smelt in unit time, and controlling the smelting efficiency to be ≥100 kg/h accord to the size of the smelting furnace;

> (3) according to the critical dimension d of the iron droplets and the critical settling velocity v of the iron droplets when the iron droplets settle completely, determining the relationship between the viscosity and the density of the slag phase corresponding to the complete settlement of the iron droplets:
> according to the force analysis of the iron droplets in the smelting slag, a force balance equation of the iron droplets in the smelting slag is established, wherein the iron droplets are acted by three forces of gravity, buoyancy and viscous force in the smelting slag, and the iron droplets settles at a uniform speed when the gravity, the buoyancy and the viscous force reach balance in the settling process; the stress balance equation of that molten iron droplets in the smelt slag is as follows:

$$\frac{\pi \rho_{Fe} g d^3}{6} = \frac{\pi \rho_s g d^3}{6} + 3\pi \eta d v \qquad \text{(Formula 1)}$$

The relationship between the settlement velocity v of the iron droplets relative to the slag phase and the diameter d of the iron droplets when the forces are balanced in the smelting slag is determined as follows:

$$v = \frac{(\rho_{Fe} - \rho_s)gd^2}{18\eta} \qquad \text{(Formula 2)}$$

in the formulas (1) and (2), $\eta$ is the viscosity of the slag phase in a unit of Pa·s; *d is* the critical diameter of the iron droplets in a unit of m; v is the settlement velocity of the iron droplets relative to the slag phase under force balance in a unit of m/s; $\rho_{Fe}$ is the density of the iron drops in a unit of kg/m$^3$; $\rho_s$ is the density of the smelting slag in a unit of kg/m$^3$; g is the acceleration of gravity in a unit of m/s$^2$;

due to that platinum group metals content of about 1.0-2.0 wt.% in the iron alloy, the density of the iron droplets is approximate to the density of pure iron: $\rho_{Fe} = 8.58 \times 10^3 - 0.853T$ kg/m$^3$;

the density of the smelting slag is mainly determined by the chemical composition and temperature, and the density of the smelting slag is estimated by the pure component molar volume as follows:

$$V = \sum X_i V_i \qquad \text{(Formula 3)}$$

$$V_i = V_{i,1773K} + V_{i,1773} \times (T - 1773) \times \frac{0.01}{100} \qquad \text{(Formula 4)}$$

where V is the molar volume and the molar mass of the oxide, respectively, $X_i$ is the molar volume of each component, $X_{i,1773K}$ is the molar volume of each component at 1773K, and T is the absolute temperature (K);

furthermore, the density of the smelting slag can be expressed as:

$$\rho_s = \frac{M}{A + BT} \qquad \text{(Formula 6)}$$

where: M is that molar mass of the smelting slag, and A and B are constants related to the composition of the slag phase.

Further, the viscosity of the slag phase is mainly determined by temperature and chemical composition as shown in (Formula 7):

$$\eta = 0.1aT \exp(\frac{1000b}{T}) \qquad \text{(Formula 7)}$$

where T is the absolute temperature (K) and A and B are constants related to the composition of the slag phase;

(4) determining the viscosity and density range of the slag phase corresponding to the complete settlement of the iron droplets in a melting temperature range of 1573-1773K as follows: the viscosity of the slag phase is not higher than 0.30 Pa·s, and the density of the slag phase is not higher than $3.0 \times 10^3$ kg/m$^3$.

Furthermore, the target slag phase composition is simulated and determined by using thermodynamic software, which is specifically: after determining the viscosity and density range of the slag phase corresponding to the complete settlement of the iron droplets, the appropriate slag former is selected according to the composition of the carrier, the slag type is determined, the melting temperature T is fixed, the corresponding range of the slag phase composition is calculated by using thermodynamic software, a composition interval with a slag phase melting point lower than 1573K is selected according to a silicate phase diagram, and a final target slag phase composition is determined according to a principle of minimum slag amount.

Furthermore, the spent catalysts comprise any one of platinum group metals-containing catalysts with cordierite, alumina, zeolite and silica as carriers or a combination thereof.

Furthermore, when the catalyst carrier is cordierite, the density of the slag phase is $\leq 2.75 \times 10^3$ kg/m$^3$, the viscosity of the slag phase is $\leq 0.20$ Pa s, and the smelting temperature is 1673-1723 K; the added slag former comprises one of calcium oxide, borax, sodium carbonate, stainless steel slag and waste incineration fly ash or a combination thereof, and a mass ratio of the spent catalysts to the slag former is 1:0.8-1: 1.2;

when the catalyst carrier is alumina, the density of the slag phase is $\leq 3.0 \times 10^3$ kg/m³, the viscosity of the slag phase is $\leq$ 0.30 Pa s, and the melting temperature is 1723-1773 K; the added slag former comprises a combination of two or more of calcium oxide, borax, silicon dioxide, sodium carbonate, calcium fluoride, quartz, waste glass, stainless steel slag, waste incineration fly ash and waste incineration bottom ash, and the mass ratio of the spent catalysts to the slag former is 1: 1-1: 1.5;

when the catalyst carrier is zeolite, the density of the slag phase is $\leq 2.85 \times 10^3$ kg/m³, the viscosity of the slag phase is $\leq$ 0.22 Pa s, and the melting temperature is 1623-1723 K; the added slag former comprises a combination of two or more of calcium oxide, borax, sodium carbonate, waste glass, stainless steel slag, waste incineration fly ash and waste incineration bottom ash, and the mass ratio of the spent catalysts to the slag former is 1: 0.5-1: 1.1;

when the catalyst carrier is silica, the density of the slag phase is $\leq 2.45 \times 10^3$ kg/m³, the viscosity of slag phase is $\leq$ 0.18 Pa s, and the melting temperature is 1573-1673 K; the added slag former comprises a combination of two or more of calcium oxide, borax, sodium carbonate, stainless steel slag, waste incineration fly ash and waste incineration bottom ash, and the mass ratio of the spent catalysts to the slag former is 1:0.4-1:1.0.

Furthermore, the slag design method can improve the separation efficiency of the slag phase and a ferroalloy, and reduce a content of platinum group metals in the slag, so that the content of the platinum group metals in the slag is not higher than 10 g/t.

Furthermore, the method for collection of platinum group metals in the spent catalysts by iron comprises the following steps:

S31, uniformly mixing a well-proportioned collector, the spent catalysts and the slag former, and then loading the mixture into a smelting furnace;

S32, preheating for 10-30 min, and then heating and smelting;

S33, standing after the reaction is complete, so that an alloy melt fully trappings platinum group metals and sinks to the bottom; an iron alloy and a smelting slag rich in platinum group metals are obtained by separating the slag from metals.

The principle of the present application is: using the principle that iron and platinum group metals form solid solution, in the smelting process, the collector iron melts first, and begins to settle due to gravity; during the settling process, platinum group metals are continuously collected and merged with the surrounding iron droplets to grow up; during the settling process, under the action of gravity, viscous force and buoyancy, the three balance and then drop at a uniform speed, finally achieving the separation of alloy phase and slag phase. The trapping efficiency of platinum group metals depends on the iron droplets that do not enter the alloy phase, that is, the separation degree of the slag from iron. Therefore, the key of the present application lies in improving the separation efficiency of slag phase and ferroalloy and reducing the platinum group metals content in slag. Through modeling, solution and analysis, the factors that affect the trapping rate are only melting temperature, time and slag phase composition. The melting temperature and time are controlled, and the corresponding slag phase composition range is calculated by thermodynamic software and data.

The present application discloses a slag design method for platinum group metals in iron trapping of spent catalysts, which determines a target slag type through modeling, calculation and solution, software simulation and analysis, and verifies and optimizes the slag phase components by adding a slag former. According to the requirements of target slag type, the added slag formers include two or more of calcium oxide, borax, silicon dioxide, sodium carbonate, quartz, waste glass, stainless steel slag, waste incineration fly ash and waste incineration bottom ash. Among them, waste glass and waste incineration bottom ash are general solid wastes, which mainly contain $SiO_2$, $Na_2O$ and $SiO_2$ and CaO respectively; stainless steel slag and waste incineration fly ash are hazardous solid wastes, which mainly contain CaO, $SiO_2$, $K_2O$, $Na_2O$ and CaO, and also contain heavy metals such as Cr, Pb, Zn and Cd. The slag design method not only greatly improves the research and development efficiency and shortens the research and development period of the slag type, but also can cooperatively dispose parts of solid waste and dangerous solid waste by utilizing the slag type designed by the method, thereby realizing efficient collection of platinum group metals and having remarkable economic, environmental and social benefits.

The present application has the beneficial effects that:

(1) the slag design method of the present application provides theoretical guidance and support for efficient iron trapping of platinum group metals, which can reduce experimental workload, shorten the research and development cycle and reduce research and development cost;

(2) the slag design method of the present application has wide application range and wide technical window, and is suitable for the allocation and composition optimization of various spent catalysts iron trapping platinum group metals slag types;

(3) the slag type designed by the present application has the characteristics of low viscosity, melting point, low viscosity, low density, etc., which is beneficial to improving the separation efficiency of slag iron; the content of platinum group metals in the slag is lower than 10 g/t, and the recovery rate of platinum group metals is not less than 99%, which has remarkable economic benefits;

(4) according to the target slag phase components designed by the present application, solid wastes or hazardous wastes such as waste glass, stainless steel slag, waste incineration fly ash and bottom ash can be added as slag formers, so as to realize the purpose of treating waste with waste and recycling waste.

BRIEF DESCRIPTION OF DRAWINGS

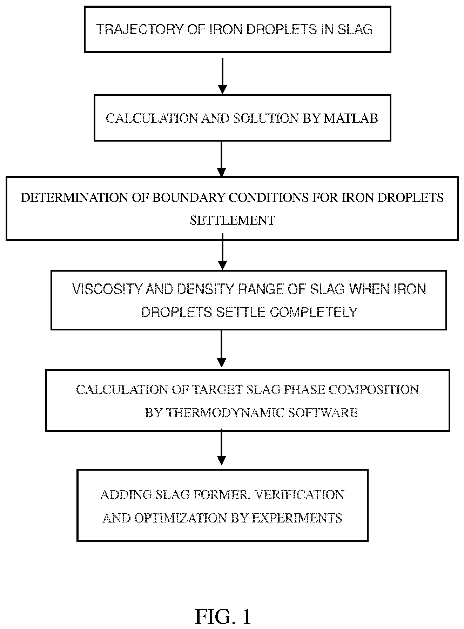

FIG. 1 is a flow chart showing a slag design method for iron trapping of platinum group metals from spent catalysts according to an embodiment of the present application.

DESCRIPTION OF EMBODIMENTS

Hereinafter, specific embodiments of the present application will be described in detail with reference to specific drawings. It should be noted that the technical features or combinations of technical features described in the following embodiments should not be regarded as isolated, and they can be combined with each other to achieve better technical effects. In the drawings of the following embodiments, the same reference numerals appearing in each drawing represent the same features or components, which can be applied to different embodiments.

The present application is a slag design method for platinum group metals in iron trapping of spent catalysts. As shown in FIG. 1, firstly, the kinematic track of molten iron droplets in a smelting slag is analyzed as follows:

$$\frac{\pi \rho_{Fe} g d^3}{6} = \frac{\pi \rho_s g d^3}{6} + 3\pi \eta d v$$ ; then

the relationship between the movement displacement of the iron droplets and the diameter of the iron droplets is obtained by solving with Matlab, the critical dimension when the iron droplets are completely settled is determined, and the range of the viscosity and density of the slag phase is clarified. The target slag phase composition is calculated using the thermodynamic software and data. Finally, the slag type of the spent catalysts is verified and optimized, and the efficient trapping of platinum group metals is achieved.

The realization of the application will be described in detail below in connection with specific examples.

Example 1

With cordierite supported spent catalysts as raw materials, the boundary conditions were determined as follows: melting temperature 1673K, settling velocity $\geq 1.0 \times 10^{-5}$ m/s, critical dimension $\leq 20$ $\mu$m; the viscosity of the slag phase was calculated as $\leq 0.2$ Pa s and the density thereof as $\leq 2.75 \times 10^3$ kg/m$^3$. According to the composition of the carrier, the mass ratio of $Al_2O_3/SiO_2$ in the slag phase was defined to be 1:1.4-1:1.6, $Al_2O_3 \geq 20$ wt.%, and a target slag type with CaO 20-22 wt.%, $SiO_2$ 23-35 wt.%, $Al_2O_3$ 21-23 wt.%, $Na_2O$ 8-11 wt.%, MgO 7-9 wt.%, $ZrO_2$ 4-6 wt.%, $CeO_2$ 2-4 wt.%, $Fe_2O_3$ 2-4 wt.% and $B_2O_3$ 3-5 wt.% was obtained by simulation with thermodynamic software. According to the simulated slag phase composition, 100 parts of a waste automobile exhaust catalyst, 45 parts of calcium oxide, 34 parts of sodium carbonate, 10 parts of borax, 10 parts of iron powder and 5 parts of calcium fluoride were uniformly mixed and then added into a smelting furnace, preheated for 15min, then melted at 1673K, and then cast after being melted and settled for 120 min; the content of platinum group metals in the slag was 8.2 g/t, and the particle size of iron particles in the slag was found to be 12.8 $\mu$m by scanning electron microscope.

Example 2

With cordierite supported spent catalysts as raw materials, the boundary conditions were determined as follows: melting temperature 1693K, settling velocity $\geq 1.7 \times 10^{-5}$ m/s, critical dimension $\leq 17$ $\mu$m; the viscosity of the slag phase was calculated as $\leq 0.18$ Pa s and the density thereof as $\leq 2.65 \times 10^3$ kg/m$^3$. According to the composition of the carrier, the mass ratio of $Al_2O_3/SiO_2$ in the slag phase was defined to be 1:1.4-1:1.6, $Al_2O_3 \geq 20$ wt.%, and a target slag type with CaO 22-28 wt.%, $SiO_2$ 22-26 wt.%, $Al_2O_3$ 20-25 wt.%, $Na_2O$ 5-17 wt.%, MgO 7-10 wt.%, $ZrO_2$ 4-6 wt.%, $CeO_2$ 3-4 wt.%, $Fe_2O_3$ 2-4 wt.% and $B_2O_3$ 3-5 wt.% was obtained by simulation with thermodynamic software. According to the simulated slag phase composition, 100 parts of a waste automobile exhaust catalyst, 60 parts of stainless steel slag, 30 parts of sodium carbonate, 7 parts of borax and 13 parts of iron powder were uniformly mixed and then added into a smelting furnace, preheated for 20min, then melted at 1693K, and then cast after being melted and settled for 100 min; the content of platinum group metals in the slag was 6.7 g/t, and the particle size of iron particles in the slag was found to be 6.4 $\mu$m by scanning electron microscope, which was consistent with the simulation result.

Example 3

With cordierite supported spent catalysts as raw materials, the boundary conditions were determined as follows: melting temperature 1723K, settling velocity $\geq 2.2 \times 10^{-5}$ m/s, critical dimension $\leq 10$ $\mu$m; the viscosity of the slag phase was calculated as $\leq 0.16$ Pa s and the density thereof as $\leq 2.45 \times 10^3$ kg/m$^3$. According to the composition of the carrier, the mass ratio of $Al_2O_3/SiO_2$ in the slag phase was defined to be 1:1.4-1:1.6, $Al_2O_3 \geq 20$ wt.%, and a target slag type with CaO 20-25 wt.%, $SiO_2$ 24-30 wt.%, $Al_2O_3$ 22-28 wt.%, $Na_2O$ 14-22 wt.%, MgO 6-13 wt.%, $ZrO_2$ 4-6 wt.%, $CeO_2$ 3-4 wt.%, $Fe_2O_3$ 2-4 wt.%, $B_2O_3$ 5-9 wt.% was obtained by simulation with thermodynamic software. According to the simulated slag phase composition, 100 parts of a waste automobile exhaust catalyst, 40 parts of garbage incineration fly ash, 40 parts of stainless steel slag, 25 parts of sodium carbonate, 15 parts of borax and 15 parts of iron powder were uniformly mixed and then added into a smelting furnace, preheated for 20min, then melted at 1723K, and then cast after being melted and settled for 50 min; the content of platinum group metals in the slag was 5.2 g/t, and the particle size of iron particles in the slag was found to be 4.8 $\mu$m by scanning electron microscope, which was consistent with the simulation result.

Example 4

With aluminium oxide supported spent catalysts as raw materials, the boundary conditions were determined as follows: melting temperature 1723K, settling velocity $\geq 1.6 \times 10^{-5}$ m/s, critical dimension $\leq 10$ $\mu$m; the viscosity of the slag phase was calculated as $\leq 0.3$ Pa s and the density thereof as $< 3.0 \times 10^3$ kg/m$^3$. According to the composition of the carrier, a slag phase with $Al_2O_3 \geq 40$ wt.% was defined, and a target slag type with CaO 25-35 wt.%, $SiO_2$ 8-12 wt.%, $Al_2O_3$ 40-50 wt.%, $Na_2O$ 8-12 wt.%, $Fe_2O_3$ 2-4 wt.%, $CaF_2$ 3-4 wt.%, $B_2O_3$ 3-5 wt.% was obtained by simulation with thermodynamic software. According to the simulated slag phase composition, 100 parts of a platinum-containing alumina carrier waste catalyst, 70 parts of garbage incineration fly ash, 10 parts of quartz, 10 parts of waste glass, 26 parts of sodium carbonate, 8 parts of borax and 15 parts of iron powder were uniformly mixed and then added into a smelting furnace, preheated for 20min, then melted at 1723K, and then cast after being melted and settled for 70 min; the content of platinum in the slag was 9.4 g/t, and the particle size of iron particles in the slag was found to be 14.5 $\mu$m by scanning electron microscope, which was consistent with the simulation result.

Example 5

With aluminium oxide supported spent catalysts as raw materials, the boundary conditions were determined as follows: melting temperature 1753K, settling velocity $\geq 1.64 \times 10^{-5}$ m/s, critical dimension $\leq 16$ $\mu$m; the viscosity of the slag phase was calculated as $\leq 0.26$ Pa s and the density thereof as $\leq 2.72 \times 10^3$ kg/m$^3$. According to the composition of the carrier, a slag phase with $Al_2O_3 \geq 45$ wt.% was defined, and a target slag type with CaO 15-24 wt.%, $SiO_2$ 13-18 wt.%, $Al_2O_3$ 45-55 wt.%, $Na_2O$ 15-22 wt.%, $Fe_2O_3$ 1-2 wt.%, $CaF_2$ 5-8 wt.%, $B_2O_3$ 5-9 wt.% was obtained by simulation with thermodynamic software. According to the simulated slag phase composition, 100 parts of a palladium-containing alumina carrier waste catalyst, 40 parts of garbage incineration fly ash, 30 parts of garbage incineration bottom ash, 20 parts of waste glass, 40 parts of sodium carbonate, 10 parts of calcium fluoride, 10 parts of borax and 15 parts of iron powder were uniformly mixed and then added into a smelting furnace, preheated for 20min, then melted at 1753K, and then cast after being melted and settled for 70 min; the content of palladium in the slag was 7.2 g/t, and the particle size of iron particles in the slag was found to be 15.4$\mu$m by scanning electron microscope, which was consistent with the simulation result.

Example 6

With aluminium oxide supported spent catalysts as raw materials, the boundary conditions were determined as follows: melting temperature 1773K, settling velocity $\geq 2.32 \times 10^{-5}$ m/s, critical dimension $\leq 16$ $\mu$m; the viscosity of the slag phase was calculated as $\leq 0.22$ Pa s and the density thereof as $\leq 2.56 \times 10^3$ kg/m$^3$. According to the composition of the carrier, a slag phase with $Al_2O_3 \geq 45$ wt.% was defined, and a target slag type with CaO 27-32 wt.%, $SiO_2$ 10-13 wt.%, $Al_2O_3$ 42-47 wt.%, $Na_2O$ 13-15 wt.%, $Fe_2O_3$ 1-3 wt.%, $CaF_2$ 4-5 wt.%, $B_2O_3$ 4-5 wt.% was obtained by simulation with thermodynamic software. According to the simulated slag phase composition, 100 parts of a palladium-containing alumina carrier waste catalyst, 60 parts of garbage incineration fly ash, 20 parts of garbage incineration bottom ash, 22 parts of quartz, 20 parts of sodium carbonate, 11 parts of borax and 10 parts of iron powder were uniformly mixed and then added into a smelting furnace, preheated for 30min, then melted at 1773K, and then cast after being melted and settled for 30 min; the content of palladium in the slag was 6.3 g/t, and the particle size of iron particles in the slag was found to be 5.6$\mu$m by scanning electron microscope, which was consistent with the simulation result.

Example 7

With zeolite supported spent catalysts as raw materials, the boundary conditions were determined as follows: melting temperature 1623K, settling velocity $\geq 1.3 \times 10^{-5}$ m/s, critical dimension $\leq 15$ $\mu$m; the viscosity of the slag phase was calculated as $\leq 0.22$ Pa s and the density thereof as $\leq 2.85 \times 10^3$ kg/m$^3$. According to the composition of the carrier, a slag phase with SiO$_2 \geq 40$ wt.% was defined, and a target slag type with CaO 20-36 wt.%, SiO$_2$ 40-60 wt.%, Al$_2$O$_3$ 20-33 wt.%, Na$_2$O 8-15 wt.%, Fe$_2$O$_3$ 2-4 wt.%, B$_2$O$_3$ 2-8 wt.% was obtained by simulation with thermodynamic software. According to the simulated slag phase composition, 100 parts of a platinum-containing zeolite carrier waste catalyst, 50 parts of garbage incineration fly ash, 20 parts of stainless steel slag, 10 parts of waste glass, 24 parts of sodium carbonate, 6 parts of borax and 15 parts of iron powder were uniformly mixed and then added into a smelting furnace, preheated for 20min, then melted at 1623K, and then cast after being melted and settled for 180 min; the content of platinum in the slag was 5.9 g/t, and the particle size of iron particles in the slag was found to be 5.9$\mu$m by scanning electron microscope, which was consistent with the simulation result.

Example 8

With zeolite supported spent catalysts as raw materials, the boundary conditions were determined as follows: melting temperature 1623K, settling velocity $\geq 1.3 \times 10^{-5}$ m/s, critical dimension $\leq 15$ $\mu$m; the viscosity of the slag phase was calculated as $\leq 0.22$ Pa s and the density thereof as $\leq 2.85 \times 10^3$ kg/m$^3$. According to the composition of the carrier, a slag phase with SiO$_2 \geq 40$ wt.% was defined, and a target slag type with CaO 20-36 wt.%, SiO$_2$ 40-60 wt.%, Al$_2$O$_3$ 20-33 wt.%, Na$_2$O 8-15 wt.%, Fe$_2$O$_3$ 2-4 wt.%, B$_2$O$_3$ 2-8 wt.% was obtained by simulation with thermodynamic software. According to the simulated slag phase composition, 100 parts of a platinum-containing zeolite carrier waste catalyst, 50 parts of garbage incineration fly ash, 20 parts of stainless steel slag, 10 parts of waste glass, 24 parts of sodium carbonate, 6 parts of borax and 15 parts of iron powder were uniformly mixed and then added into a smelting furnace, preheated for 20min, then melted at 1623K, and then cast after being melted and settled for 180 min; the content of palladium in the slag was 4.1 g/t, and the particle size of iron particles in the slag was found to be 8.1 $\mu$m by scanning electron microscope, which was consistent with the simulation result.

Example 9

With silicon dioxide supported spent catalysts as raw materials, the boundary conditions were determined as follows: melting temperature 1573K, settling velocity $\geq 1.2 \times 10^{-5}$ m/s, critical dimension $\leq 15$ $\mu$m; the viscosity of the slag phase was calculated as $\leq 0.18$ Pa s and the density thereof as $\leq 2.45 \times 10^3$ kg/m$^3$. According to the composition of the carrier, a slag phase with SiO$_2 \geq 60$ wt.% was defined, and a target slag type with CaO 10-25 wt.%, SiO$_2$ 60-78 wt.%, Al$_2$O$_3$ 7-15 wt.%, Na$_2$O 0-20 wt.%, Fe$_2$O$_3$ 0-2 wt.%, B$_2$O$_3$ 0-3 wt.% was obtained by simulation with thermodynamic software. According to the simulated slag phase composition, 100 parts of a platinum-containing silicon dioxide carrier waste catalyst, 10 parts of calcium oxide, 10 parts of garbage incineration bottom ash, 10 parts of stainless steel slag, 5 parts of sodium carbonate, 5 parts of borax and 10 parts of iron powder were uniformly mixed and then added into a smelting furnace, preheated for 20min, then melted at 1573K, and then cast after being melted and settled for 60min; the content of platinum in the slag was 9.5 g/t, and the particle size of iron particles in the slag was found to be 10.7 $\mu$m by scanning electron microscope, which was consistent with the simulation result.

Example 10

With silicon dioxide supported spent catalysts as raw materials, the boundary conditions were determined as follows: melting temperature 1623K, settling velocity $\geq 2.1 \times 10^{-5}$ m/s, critical dimension $\leq 16$ $\mu$m; the viscosity of the slag phase was calculated as $\leq 0.16$ Pa s and the density thereof as $\leq \leq 2.4 \times 10^3$ kg/m$^3$. According to the composition of the carrier, a slag phase with SiO$_2 \geq 65$ wt.% was defined, and a target slag type with CaO 12-23 wt.%, SiO$_2$ 65-74 wt.%, Al$_2$O$_3$ 10-21 wt.%, Na$_2$O 5-14 wt.%, Fe$_2$O$_3$ 1-2 wt.%, B$_2$O$_3$ 2-8 wt.% was obtained by simulation with thermodynamic software. According to the simulated slag phase composition, 100 parts of palladium-containing silica carrier spent catalyst, 30 parts of waste incineration fly ash, 12 parts of sodium carbonate, 10 parts of borax and 10 parts of iron powder were uniformly mixed and then added into a smelting furnace, preheated for 15min, then melted at 1623K, and then cast after being melted and settled for 30min; the content of palladium in the slag was 7.1 g/t, and the particle size of iron particles in the slag was found to be 12.3 $\mu$m by scanning electron microscope, which was consistent with the simulation result.

Example 11

With silicon dioxide supported spent catalysts as raw materials, the boundary conditions were determined as follows: melting temperature 1673K, settling velocity $\geq 3.6 \times 10^{-5}$ m/s, critical dimension $\leq 14$ $\mu$m; the viscosity of the slag phase was calculated as $\leq 0.16$ Pa s and the density thereof as $\leq \leq 2.37 \times 10^3$ kg/m$^3$. According to the composition of the carrier, a slag phase with $SiO_2 \geq 70$ wt.% was defined, and a target slag type with CaO 0-20 wt.%, $SiO_2$ 70-80 wt.%, $Al_2O_3$ 5-15 wt.%, $Na_2O$ 10-20 wt.%, $B_2O_3$ 5-15 wt.% was obtained by simulation with thermodynamic software. According to the simulated slag phase composition, 1100 parts of a palladium-containing silica carrier spent catalyst, 10 parts of calcium oxide, 10 parts of silica, 15 parts of sodium carbonate, 5 parts of borax and 10 parts of iron powder were uniformly mixed and then added into a smelting furnace, preheated for 20min, then melted at 1673K, and then cast after being melted and settled for 240min; the content of palladium in the slag was 3.7 g/t, and the particle size of iron particles in the slag was found to be 8.6 $\mu$m by scanning electron microscope, which was consistent with the simulation result.

**Claims**

1. A slag design method for iron trapping of platinum group metals from spent catalysts, comprising:

   S1, determining ranges of a viscosity and a density of a slag phase according to a critical dimension and a settling speed when iron droplets settle completely by analyzing a movement track of the iron droplets in a smelting slag;
   S2, selecting, according to a type of spent catalysts carrier, a type of slag former, and determining a composition of slag phase elements, selecting an appropriate melting temperature interval;
   S3, adding the slag former to adjust the slag phase composition, verifying and optimizing the slag type of the spent catalyst, and realizing efficient collection of platinum group metals
   **characterized in that** the step S1 specifically comprises

   (1) determining that the critical dimension d of the iron droplets is not more than 20$\mu$m;
   (2) determining a critical settling velocity v of the iron droplets based on smelting efficiency: the settling velocity of the iron droplets is not less than $1.0 \times 10^{-5}$ m/s under force balance;
   (3) according to the critical dimension d of the iron droplets and the critical settling velocity v of the iron droplets when the iron droplets settle completely, determining the relationship between the viscosity and the density of the slag phase corresponding to the complete settlement of the iron droplets:

$$v = \frac{(\rho_{Fe} - \rho_s)gd^2}{18\eta}$$

   where, the critical settling velocity v of the iron droplets refers to the settling velocity of the iron droplets relative to the slag phase when the iron droplets in the smelting slag is under force balance in a unit of m/s; $\eta$ is the viscosity of the slag phase in a unit of Pa·s; d is a diameter of the iron droplets when the iron droplets are under force balance in a unit of m; $\rho_{Fe}$ is the density of the iron drops in a unit of kg/m$^3$; $\rho_s$ is the density of the smelting slag in a unit of kg/m$^3$; g is the acceleration of gravity in a unit of m/s$^2$;
   wherein, the density $\rho_s$ of the smelting slag and the viscosity $\eta$ of the slag phase are only related to the composition of the slag phase and a smelting temperature:

$$\rho_s = \frac{M}{A + BT} ;$$

$$\eta = 0.1aT \exp(\frac{1000b}{T})$$

M is a molar mass of the smelting slag in a unit of kg/mol; T is the melting temperature in a unit of K; A, b, a and b are constants related to the slag phase composition;

(4) determining the viscosity and density range of the slag phase corresponding to the complete settlement of the iron droplets in a melting temperature range of 1573-1773K as follows: the viscosity of the slag phase is not higher than 0.30 Pa·s, and the density of the slag phase is not higher than $3.0 \times 10^3$ kg/m$^3$;

step S2 further comprises adopting thermodynamic software to calculate and determine a target slag phase composition by simulation; and
step S3 is realized according to the target slag phase composition determined by simulation, based on the spent catalysts carrier.

2. The slag design method for iron trapping of platinum group metals from spent catalysts according to claim 1, wherein the target slag phase composition is simulated and determined by using thermodynamic software, which is specifically: after determining the viscosity and density range of the slag phase corresponding to the complete settlement of the iron droplets, the appropriate slag former is selected according to the composition of the carrier, the slag type is determined, the melting temperature T is fixed, the corresponding range of the slag phase composition is calculated by using thermodynamic software, a composition interval with a slag phase melting point lower than 1573K is selected according to a silicate phase diagram, and a final target slag phase composition is determined according to a principle of minimum slag amount.

3. The slag design method for iron trapping of platinum group metals from spent catalysts according to claim 1, wherein the spent catalysts comprises any one of platinum group metals-containing catalysts with cordierite, alumina, zeolite and silica as carriers or a combination thereof.

4. The slag design method for iron trapping of platinum group metals from spent catalysts according to claim 1, wherein when the catalyst carrier is cordierite, the density of the slag phase is $\leq 2.75 \times 10^3$ kg/m$^3$, the viscosity of the slag phase is $\leq 0.20$ Pa·s, and the smelting temperature is 1673-1723 K; the added slag former comprises one of calcium oxide, borax, sodium carbonate, stainless steel slag and waste incineration fly ash or a combination thereof, and a mass ratio of the spent catalysts to the slag former is 1:0.8-1:1.2;

when the catalyst carrier is alumina, the density of the slag phase is $\leq 3.0 \times 10^3$ kg/m$^3$, the viscosity of the slag phase is $\leq 0.30$ Pa·s, and the melting temperature is 1723-1773 K; the added slag former comprises a combination of two or more of calcium oxide, borax, silicon dioxide, sodium carbonate, calcium fluoride, quartz, waste glass, stainless steel slag, waste incineration fly ash and waste incineration bottom ash, and the mass ratio of the spent catalysts to the slag former is 1: 1-1: 1.5;
when the catalysts carrier is zeolite, the density of the slag phase is $\leq 2.85 \times 10^3$ kg/m$^3$, the viscosity of the slag phase is $\leq 0.22$ Pa·s, and the melting temperature is 1623-1723 K; the added slag former comprises a combination of two or more of calcium oxide, borax, sodium carbonate, waste glass, stainless steel slag, waste incineration fly ash and waste incineration bottom ash, and the mass ratio of the spent catalysts to the slag former is 1: 0.5-1: 1.1;
when the catalyst carrier is silica, the density of the slag phase is $\leq 2.45 \times 10^3$ kg/m$^3$, the viscosity of slag phase is $\leq 0.18$ Pa·s, and the melting temperature is 1573-1673 K; the added slag former comprises a combination of two or more of calcium oxide, borax, sodium carbonate, stainless steel slag, waste incineration fly ash and waste incineration bottom ash, and the mass ratio of the spent catalysts to the slag former is 1:0.4-1: 1.0.

5. The slag design method for iron trapping of platinum group metals from spent catalysts according to claim 1, wherein the slag design method can improve the separation efficiency of the slag phase and a ferroalloy, and reduce a content of platinum group metals in the slag, so that the content of the platinum group metals in the slag is not higher than 10 g/t.

6. The slag design method for iron trapping of platinum group metals from spent catalysts according to any of claims 1-6, wherein the method for collection of platinum group metals in the spent catalysts by iron comprises the following steps:

S31, uniformly mixing a well-proportioned collector, the spent catalysts and the slag former, and then loading the mixture into a smelting furnace;
S32, preheating for 10-30 min, and then heating and smelting;

S33, standing after the reaction is complete, so that an alloy melt fully trappings platinum group metals and sinks to the bottom; an iron alloy rich in platinum group metals and a smelting slag are obtained by separating the slag from metals.

**Patentansprüche**

1. Verfahren zur Gestaltung einer Schlacke für die Eisenabscheidung von Platingruppenmetallen aus verbrauchten Katalysatoren, umfassend:

S1, Bestimmen von Bereichen einer Viskosität und einer Dichte einer Schlackenphase entsprechend einer kritischen Dimension und einer Absetzgeschwindigkeit, wenn sich Eisentröpfchen vollständig absetzen, durch Analysieren einer Bewegungsspur der Eisentröpfchen in einer Schmelzschlacke;
S2, Auswählen einer Art von Schlackenbildner je nach Art des verbrauchten Katalysatorträgers und Bestimmen der Zusammensetzung der Schlackenphasenelemente, Auswählen eines geeigneten Schmelztemperaturintervalls;
S3, Hinzufügen des Schlackenbildners zur Anpassung der Zusammensetzung der Schlackenphase, Überprüfen und Optimieren des Schlackentyps des verbrauchten Katalysators und Realisieren einer effizienten Sammlung von Platingruppenmetallen,
**dadurch gekennzeichnet, dass** der Schritt S1 insbesondere Folgendes umfasst:

(1) Bestimmen, dass die kritische Dimension der Eisentröpfchen nicht mehr als $20\,\mu m$ beträgt;
(2) Bestimmen einer kritischen Absetzgeschwindigkeit v der Eisentröpfchen auf der Grundlage des Schmelzwirkungsgrads: die Absetzgeschwindigkeit der Eisentröpfchen beträgt nicht weniger als $1,0\times10^{-5}$ m/s unter Kraftausgleich;
(3) nach der kritischen Dimension d der Eisentröpfchen und der kritischen Absetzgeschwindigkeit v der Eisentröpfchen, wenn sich die Eisentröpfchen vollständig absetzen, Bestimmen des Verhältnisses zwischen der Viskosität und der Dichte der Schlackenphase, die dem vollständigen Absetzen der Eisentröpfchen entspricht:

$$v = \frac{(\rho_{Fe} - \rho_s)gd^2}{18\eta}$$

wobei sich die kritische Absetzgeschwindigkeit v der Eisentröpfchen auf die Absetzgeschwindigkeit der Eisentröpfchen relativ zur Schlackenphase bezieht, wenn sich die Eisentröpfchen in der Schmelzschlacke im Kräftegleichgewicht befinden, in der Einheit m/s; wobei $\eta$ die Viskosität der Schlackenphase in der Einheit Pa-s ist; wobei d der Durchmesser der Eisentröpfchen ist, wenn sich die Eisentröpfchen im Kräftegleichgewicht befinden, in der Einheit m; wobei $\rho_{Fe}$ die Dichte der Eisentröpfchen in der Einheit kg/m$^3$ ist; wobei $\rho_s$ die Dichte der Schmelzschlacke in der Einheit kg/m$^3$ ist; wobei g die Erdbeschleunigung in der Einheit m/s$^2$ ist;
wobei die Dichte $\rho_s$ der Schmelzschlacke und die Viskosität $\eta$ der Schlackenphase nur von der Zusammensetzung der Schlackenphase und einer Schmelztemperatur abhängig sind:

$$\rho_s = \frac{M}{A + BT} ;$$

$$\eta = 0.1aT \exp(\frac{1000b}{T})$$

wobei M die molare Masse der Schmelzschlacke in der Einheit kg/mol ist; T die Schmelztemperatur in der Einheit K ist; A, b, a und b Konstanten sind, die sich auf die Zusammensetzung der Schlackenphase beziehen;

(4) Bestimmen von Bereichen einer Viskosität und einer Dichte der Schlackenphase, der der vollständigen Absetzen der Eisentröpfchen in einem Schmelztemperaturbereich von 1573-1773 K entspricht, wie folgt:

die Viskosität der Schlackenphase ist nicht höher als 0,30 Pa-s, und die Dichte der Schlackenphase ist nicht höher als $3,0 \times 10^3$ kg/m$^3$;

wobei Schritt S2 ferner die Anwendung einer thermodynamischen Software zur Berechnung und Bestimmung einer Zielzusammensetzung der Schlackenphase durch Simulation umfasst; und
Schritt S3 entsprechend der durch Simulation ermittelten Zielzusammensetzung der Schlackenphase auf der Grundlage des verbrauchten Katalysatorträgers durchgeführt wird.

2.  Verfahren zur Gestaltung einer Schlacke für die Eisenabscheidung von Platingruppenmetallen aus verbrauchten Katalysatoren nach Anspruch 1, wobei die Zielzusammensetzung der Schlackephase unter Verwendung einer thermodynamischen Software simuliert und bestimmt wird, die spezifisch ist: nach dem Bestimmen von Bereichen einer Viskosität und einer Dichte der Schlackenphase, der der vollständigen Absetzen der Eisentröpfchen, wird der geeignete Schlackenbildner entsprechend der Zusammensetzung des Trägers ausgewählt, wobei die Schlackenart bestimmt wird, wobei die Schmelztemperatur T festgelegt wird, wobei der entsprechende Bereich der Zusammensetzung der Schlackenphasen unter Verwendung einer thermodynamischen Software berechnet wird,wobei ein Zusammensetzungsintervall mit einem Schlackenphasenschmelzpunkt unter 1573 K gemäß einem Silikatphasendiagramm ausgewählt wird, und wobei eine endgültige Zielzusammensetzung der Schlackenphasen gemäß einem Prinzip der minimalen Schlackenmenge bestimmt wird.

3.  Verfahren zur Gestaltung einer Schlacke für die Eisenabscheidung von Platingruppenmetallen aus verbrauchten Katalysatoren nach Anspruch 1, wobei die verbrauchten Katalysatoren einen beliebigen Platingruppenmetalle enthaltenden Katalysator mit Cordierit, Aluminiumoxid, Zeolith und Siliciumdioxid als Träger oder einer Kombination davon umfassen.

4.  Verfahren zur Gestaltung einer Schlacke für die Eisenabscheidung von Platingruppenmetallen aus verbrauchten Katalysatoren nach Anspruch 1, wobei, wenn der Katalysatorträger Cordierit ist, die Dichte der Schlackenphase $\leq 2,75 \times 10^3$ kg/m$^3$ ist, die Viskosität der Schlackenphase $\leq 0. 20$ Pa·s ist und die Schmelztemperatur 1673-1723 K beträgt; wobei der zugesetzte Schlackenbildner eines von Calciumoxid, Borax, Natriumcarbonat, Edelstahlschlacke und Abfallverbrennungsflugasche oder eine Kombination davon umfasst und ein Massenverhältnis der verbrauchten Katalysatoren zu dem Schlackenbildner 1:0,8-1:1,2 beträgt;

wenn der Katalysatorträger Aluminiumoxid ist, die Dichte der Schlackenphase $\leq 3,0 \times 10^3$ kg/m$^3$ ist, die Viskosität der Schlackenphase $\leq 0. 30$ Pa·s ist, und die Schmelztemperatur 1723-1773 K beträgt; wobei der zugesetzte Schlackenbildner eine Kombination aus zwei oder mehr von Calciumoxid, Borax, Siliciumdioxid, Natriumcarbonat, Calciumfluorid, Quarz, Altglas, Edelstahlschlacke, Abfallverbrennungsflugasche und Abfallverbrennnungsbodenasche umfasst, und wobei das Massenverhältnis der verbrauchten Katalysatoren zum Schlackenbildner 1:1-1:1.5 beträgt;
wenn der Katalysatorträger Zeolith ist, die Dichte der Schlackenphase $\leq 2,85 \times 10^3$ kg/m$^3$ ist, die Viskosität der Schlackenphase $\leq 0. 22$ Pa·s ist, und die Schmelztemperatur 1623-1723 K beträgt; wobei der zugesetzte Schlackenbildner eine Kombination aus zwei oder mehr von Calciumoxid, Borax, Natriumcarbonat, Altglas, Edelstahlschlacke, Abfallverbrennungsflugasche und Abfallverbrennungsbodenasche umfasst, und wobei das Massenverhältnis der verbrauchten Katalysatoren zum Schlackenbildner 1: 0,5-1: 1,1 beträgt;
wenn der Katalysatorträger Siliciumdioxid ist, die Dichte der Schlackenphase $\leq 2,45 \times 10^3$ kg/m$^3$ ist, die Viskosität der Schlackenphase $\leq 0,18$ Pa·s ist und die Schmelztemperatur 1573-1673 K beträgt; wobei der zugesetzte Schlackenbildner eine Kombination aus zwei oder mehr von Calciumoxid, Borax, Natriumcarbonat, Edelstahlschlacke, Abfallverbrennungsflugasche und Abfallverbrennungsbodenasche umfasst und das Massenverhältnis der verbrauchten Katalysatoren zum Schlackenbildner 1:0,4-1:1,0 beträgt.

5.  Verfahren zur Gestaltung einer Schlacke für die Eisenabscheidung von Platingruppenmetallen aus verbrauchten Katalysatoren nach Anspruch 1, wobei das Verfahren zur Gestaltung der Schlacke die Trennungseffizienz der Schlackenphase und einer Ferrolegierung verbessern und den Gehalt an Platingruppenmetallen in der Schlacke verringern kann, so dass der Gehalt an Platingruppenmetallen in der Schlacke nicht höher als 10 g/t ist.

6.  Verfahren zur Gestaltung einer Schlacke für die Eisenabscheidung von Platingruppenmetallen aus verbrauchten Katalysatoren nach einem der Ansprüche 1 bis 6, wobei das Verfahren zum Sammeln von Platingruppenmetallen in den verbrauchten Katalysatoren durch Eisen die folgenden Schritte umfasst:

S31, gleichmäßiges Mischen eines gut proportionierten Sammlers, der verbrauchten Katalysatoren und des Schlackenbildners und anschließendes Laden der Mischung in einen Schmelzofen;

S32, Vorwärmen für 10-30 Minuten, dann Erhitzen und Schmelzen;

S33, Stehenlassen nach Abschluss der Reaktion, so dass eine Legierungsschmelze die Platingruppenmetalle vollständig einschließt und zu Boden sinkt; wobei durch die Trennung der Schlacke von den Metallen eine Eisenlegierung, die reich an Platingruppenmetallen ist, und eine Schmelzschlacke gewonnen werden.

**Revendications**

1.  Procédé de conception de scories pour le piégeage par le fer de métaux du groupe du platine à partir de catalyseurs usés, comprenant :

    S1, déterminer une plage de viscosité et une plage de densité d'une phase de scorie en fonction d'une dimension critique et d'une vitesse de déposition lorsque des gouttelettes de fer se déposent complètement en analysant une trace de mouvement des gouttelettes de fer dans une scorie fondant ;

    S2, sélectionner, en fonction d'un type de support de catalyseurs usés, un type d'agent de formation de scorie, déterminer une composition d'éléments de la phase de scorie, et sélectionner un intervalle de température de fusion approprié ; et

    S3, ajouter l'agent de formation de scorie pour ajuster la composition de phase de scorie, vérifier et optimiser le type de scorie du catalyseur usé et réaliser une collecte efficace de métaux du groupe du platine, **caractérisé en ce que** l'étape S1 comprend en particulier :

    (1) déterminer que la dimension critique d des gouttelettes de fer n'est pas supérieure à 20 $\mu$m ;

    (2) déterminer une vitesse critique de déposition v des gouttelettes de fer en fonction de l'efficacité de fusion : la vitesse de déposition des gouttelettes de fer n'est pas inférieure à $1,0 \times 10^{-5}$ m/s sous équilibre de force ;

    (3) déterminer, en fonction de la dimension critique d des gouttelettes de fer et de la vitesse critique de déposition v des gouttelettes de fer lorsque les gouttelettes de fer se déposent complètement, une relation entre la viscosité et la densité de la phase de scorie correspondant à la déposition complète des gouttelettes de fer :

    $$v = \frac{(\rho_{Fe} - \rho_s)gd^2}{18\eta}$$

    dans lequel, la vitesse critique de déposition v des gouttelettes de fer se réfère à la vitesse de déposition des gouttelettes de fer par rapport à la phase de scorie lorsque les gouttelettes de fer dans le scorie fondant sont sous l'équilibre de force en m/s ; $\eta$ est la viscosité de la phase de scorie en Pa·s ; $d$ est le diamètre des gouttelettes de fer lorsque les gouttelettes de fer sont sous l'équilibre de force en m ; $\rho_{Fe}$ est la densité des gouttes de fer en kg/m$^3$ ; $\rho_s$ est la densité du scorie fondant en kg/m$^3$; et g est l'accélération de la gravité en m/s$^2$ ;

    dans lequel la densité $\rho_s$ de la scorie fondante et la viscosité $\eta$ de la phase de scorie ne sont liées qu'à la composition de la phase de scorie et à une température de fusion :

    $$\rho_s = \frac{M}{A + BT};$$

    $$\eta = 0.1aT \exp(\frac{1000b}{T})$$

    M est une masse molaire de la scorie fondant en kg/mol ; T est la température de fusion en K ; A, b, a et b sont des constantes liées à la composition de phase de scorie

    (4) déterminer la plage de viscosité et la plage de densité de la phase de scorie correspondant à la déposition complète des gouttelettes de fer dans une plage de température de fusion de 1573 à 1773K comme suit : la viscosité de la phase de scorie n'est pas supérieure à 0,30 Pa·s, et la densité de la phase de scorie n'est pas supérieure à $3,0 \times 10^3$ kg/m³ ;

l'étape S2 comprend en outre calculer et déterminer une composition de phase de scorie cible par simulation à l'aide d'un logiciel thermodynamique ; et

l'étape S3 est mise en oeuvre en fonction de la composition de phase de scorie cible déterminée par simulation, sur la base du support de catalyseurs usés.

**2.** Procédé de conception de scories pour le piégeage par le fer de métaux du groupe du platine à partir de catalyseurs usés selon la revendication 1, dans lequel la composition de phase de scorie cible est simulée et déterminée à l'aide d'un logiciel thermodynamique, consistant en particulier en ce qu'une fois la plage de viscosité et la plage de densité de la phase de scorie correspondant à la déposition complète des gouttelettes de fer déterminées, l'agent de formation de scorie approprié est sélectionné en fonction de la composition du support, le type de scorie est déterminé, la température de fusion T est fixée, la plage correspondante de la composition de phase de scorie est calculée à l'aide d'un logiciel thermodynamique, un intervalle de composition avec un point de fusion de la phase de scorie inférieur à 1573K est sélectionné en fonction d'un diagramme de phase de silicate, et une composition finale de phase de scorie cible est déterminée sur la base d'un principe de quantité minimale de scorie.

**3.** Procédé de conception de scories pour le piégeage par le fer de métaux du groupe du platine à partir de catalyseurs usés selon la revendication 1, dans lequel les catalyseurs usés comprennent l'un quelconque des catalyseurs contenant des métaux du groupe du platine avec la cordiérite, l'alumine, la zéolite et la silice comme supports ou une combinaison de ceux-ci.

**4.** Procédé de conception de scories pour le piégeage par le fer de métaux du groupe du platine à partir de catalyseurs usés selon la revendication 1, dans lequel lorsque le support de catalyseur est la cordiérite, la densité de la phase de scorie est de $\leq 2,75 \times 10^3$ kg/m³, la viscosité de la phase de scorie est de $\leq 0,20$ Pa·s, et la température de fusion est de 1673 à 1723 K ; l'agent de formation de scorie ajouté comprend l'un parmi l'oxyde de calcium, le borax, le carbonate de sodium, le scorie d'acier inoxydable et des cendres volantes d'incinération de déchets ou une combinaison de ceux-ci, et un rapport massique des catalyseurs usés à l'agent de formation de scorie est de 1 : 0,8 à 1 : 1,2 ;

lorsque le support de catalyseur est l'alumine, la densité de la phase de scorie est de $\leq 3,0 \times 10^3$ kg/m³, la viscosité de la phase de scorie est de $\leq 0,30$ Pa·s et la température de fusion est de 1723 à 1773 K ; l'agent de formation de scorie ajouté comprend une combinaison de deux ou plusieurs parmi l'oxyde de calcium, le borax, le dioxyde de silicium, le carbonate de sodium, le fluorure de calcium, le quartz, des déchets de verre, le scorie d'acier inoxydable, des cendres volantes d'incinération de déchets et des cendres résiduelles d'incinération des déchets, et un rapport massique des catalyseurs usés à l'agent de formation de scorie est de 1 : 1 à 1 : 1,5 ;

lorsque le support de catalyseur est la zéolite, la densité de la phase de scorie est de $\leq 2,85 \times 10^3$ kg/m³, la viscosité de la phase de scorie est de $\leq 0,22$ Pa·s et la température de fusion est de 1623 à 1723 K ; l'agent de formation de scorie ajouté comprend une combinaison de deux ou plusieurs parmi l'oxyde de calcium, le borax, le carbonate de sodium, des déchets de verre, le scorie d'acier inoxydable, des cendres volantes d'incinération de déchets et des cendres résiduelles d'incinération des déchets, et un rapport massique des catalyseurs usés à l'agent de formation de scorie est de 1 : 0,5 à 1 : 1,1 ;

lorsque le support de catalyseur est la silice, la densité de la phase de scorie est de $\leq 2,45 \times 10^3$ kg/m³, la viscosité de la phase de scorie est de $\leq 0,18$ Pa·s et la température de fusion est de 1573 à 1673 K ; l'agent de formation de scorie ajouté comprend une combinaison de deux ou plusieurs parmi l'oxyde de calcium, le borax, le carbonate de sodium, le scorie d'acier inoxydable, des cendres volantes d'incinération de déchets et des cendres résiduelles d'incinération des déchets, et un rapport massique des catalyseurs usés à l'agent de formation de scorie est de 1 : 0.4 à 1 : 1,0.

**5.** Procédé de conception de scories pour le piégeage par le fer de métaux du groupe du platine à partir de catalyseurs usés selon la revendication 1, dans lequel le procédé de conception de scories peut améliorer l'efficacité de séparation de la phase de scorie et d'un ferroalliage, et réduire une teneur en métaux du groupe du platine dans la scorie, de sorte que la teneur en métaux du groupe du platine dans la scorie n'est pas supérieure à 10 g/t.

**6.** Procédé de conception de scories pour le piégeage par le fer de métaux du groupe du platine à partir de catalyseurs usés selon l'une quelconque des revendications 1 à 6, dans lequel le procédé de collecte de métaux du groupe du platine dans les catalyseurs usés par le fer comprend les étapes suivantes :

S31, mélanger de manière homogène un collecteur bien proportionné, les catalyseurs usés et l'agent de formation de scorie, puis charger le mélange dans un four de fusion ;

S32, préchauffer pendant 10 à 30 min, puis chauffer et fondre ;

S33, laisser reposer une fois la réaction complétée, de sorte qu'un alliage fondu capture complètement les métaux du groupe du platine et coule au fond ; un alliage de fer riche en métaux du groupe du platine et une scorie fondante sont obtenus en séparant la scorie des métaux.

```
┌─────────────────────────────────────────────┐
│     TRAJECTORY OF IRON DROPLETS IN SLAG       │
└─────────────────────────────────────────────┘
                       │
                       ▼
┌─────────────────────────────────────────────┐
│     CALCULATION AND SOLUTION BY MATLAB        │
└─────────────────────────────────────────────┘
                       │
                       ▼
┌─────────────────────────────────────────────────┐
│ DETERMINATION OF BOUNDARY CONDITIONS FOR IRON     │
│            DROPLETS SETTLEMENT                     │
└─────────────────────────────────────────────────┘
                       │
                       ▼
┌─────────────────────────────────────────────────┐
│ VISCOSITY AND DENSITY RANGE OF SLAG WHEN IRON     │
│        DROPLETS SETTLE COMPLETELY                  │
└─────────────────────────────────────────────────┘
                       │
                       ▼
┌─────────────────────────────────────────────────┐
│ CALCULATION OF TARGET SLAG PHASE COMPOSITION      │
│         BY THERMODYNAMIC SOFTWARE                  │
└─────────────────────────────────────────────────┘
                       │
                       ▼
┌─────────────────────────────────────────────────┐
│    ADDING SLAG FORMER, VERIFICATION               │
│    AND OPTIMIZATION BY EXPERIMENTS                 │
└─────────────────────────────────────────────────┘
```

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810185054
- CN 201610883402X
- CN 201310005494
- CN 201611141140
- CN 108875285 A
- CN 106756084 A

**Non-patent literature cited in the description**

- Highly efficient recovery of platinum, palladium, and rhodium from spent automotive catalysts via iron melting collection. **DING YUNJI.** Resources, Conservation and Recycling. Elsevier, vol. 155